# EUROPEAN PATENT APPLICATION

(11) **EP 4 169 990 A1**
(43) Date of publication of application: **26.04.2023**
(21) Application number: 21204210.5
(22) Date of filing: 22.10.2021
(51) Int. Cl.: C09D 107/00, C09D 109/00, C09D 121/00, C09D 161/02, C09D 161/06

(54) **RUBBER COATING FOR RADIOFREQUENCY IDENTIFICATION DEVICES FOR TYRES**

(71) Applicant: Bridgestone Europe NV/SA, 1930 Zaventem (BE)
(72) Inventor: PALUMBI, Maria Cecilia, 00128 Roma (IT); LIPPIELLO, Guido, 00128 Roma (IT); LOMBARDI, Roberto, 00128 Roma (IT)
(74) Representative: Marchetti, Alessio

(57) **Abstract**

A rubber coating for a radiofrequency identification device for a tyre characterized in that it comprises: (a) 100 phr of at least one diene-based elastomer; (b) at least one chemical according to formula 1 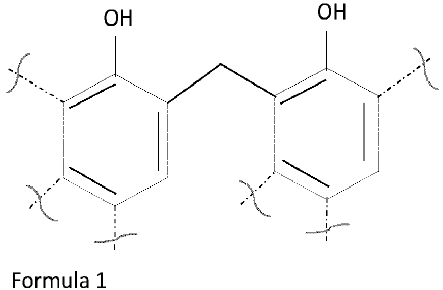 wherein the chemical comprises in its structure at least the structure of the 2,2'-methylenediphenol, and wherein the 2,2' - methylenediphenol may be substituted in ortho, para, meta position or any combination thereof with an aliphatic, linear or branched, hydrocarbon chain comprising from 1 to 10 C atoms, or may be polymerized in ortho, para, meta position or any combination thereof with one or more additional alkylphenol units.

A radiofrequency identification (RFID) module for a tyre comprising a radiofrequency identification device surrounded by a rubber coating, a tyre or a tyre retread comprising such radiofrequency identification module, and use of a rubber coating for surrounding a radiofrequency identification device.

## Description

### FIELD OF THE INVENTION

The present invention is related to a rubber coating for a radiofrequency identification (RFID) device for a tyre, to a radiofrequency identification (RFID) module for a tyre comprising a radiofrequency identification device surrounded by a rubber coating, to a tyre or a tyre retread comprising such radiofrequency identification module, and to the related use of a rubber coating for surrounding a radiofrequency identification device.

### BACKGROUND OF THE INVENTION

In the tyre industry, manufacturers have expressed the need for solutions that allow for an automated and unequivocal identification of tyres during their production, their use and their disposal.

For example, with specific reference to the production of tyres, the automated and unequivocal identification of the tyres can allow manufacturers to optimize production processes and logistics operations, support the use of automated control systems, carry out an efficient localization/tracking of the tyres and, hence, build smart tyre factories.

Nowadays, several technical solutions are known to perform this task, such as those based on radiofrequency identification (RFID) technology by the use of an RFID device for tyres.

This device substantially comprises an RFID chip and an antenna connected to the chip. In some configurations, it may further comprise a second antenna electromagnetically coupled to the first antenna. This device is arranged so as to be contained in a sandwich-like manner between two outer rubber coating layers, disposed one adjacent to the other so as to surround completely the aforementioned RFID chip and antennas. The ensemble comprising the RFID device and the surrounding coating rubber is defined as radiofrequency identification module (RFID module).

The antennas connected to the RFID chip typically used for realizing the RFID device are generally composed of a multilayered structure comprising a core of steel covered with a brass layer.

It is well known that brass is an alloy of copper and zinc in which the respective proportions of the two materials can be varied to achieve different mechanical, electrical or chemical properties. Brass can also include small proportion of a range of other elements including arsenic, lead, phosphorus, aluminum, manganese, and silicon.

Brass is a material that is sensitive to corrosion phenomena and under oxidizing condition can form on its surface a product known as patina or, in the worst case, can evolve to a destructive corrosion process known as dezincification that can cause zinc to leach out of the alloy.

Such corrosion phenomena can cause the antenna to lose its transmission performance, resulting in poor readability of the emitted or received radiofrequency signal, and even cause the RFID device to stop functioning. In addition, the antenna covered with a brass layer going through corrosion phenomena can affect the adhesion of the RFID device to the rubber coating surrounding it.

When the RFID device is not correctly fixed to the rubber coating surrounding it, there can be a splitting up of the RFID module. This splitting up jeopardizes the correct operation of the device and can cause possible damages to the adjacent rubber layers when the module is incorporated into a tyre. If the RFID device comes out of the module due to failed adhesion with the surrounding rubber coating, it could initiate cuts in the adjacent rubber portions of the tyre where it is incorporated, jeopardizing tyre durability.

To overcome the above problem, one solution known to the expert of the field is to pre-treat the antennas covered with a brass layer with adhesion enhancing agents. Such procedure has the disadvantage that, by introducing an additional production step due to the pre-treatment of the antennas, it increases the complexity of the RFID production process, causing a loss in productivity. In addition, adhesion enhancing agents are based on chemicals which may be troublesome from health and safety perspective.

Therefore, there is a need to have a solution that ensures the structural stability and durability of the radio-frequency identification module for a tyre and that, at the same time, allows to keep the readability performance of the antenna and to ensure correct functioning of the device in the long term.

The inventors of the present invention conceived a solution capable of fulfilling the aforesaid need without jeopardizing the productivity of the RFID production process and ensuring the safety of the operators.

### SUMMARY OF THE INVENTION

The technical problem underlying the present invention is therefore to overcome at least some of the drawbacks mentioned above with reference to the state of the art.

In a first aspect the present invention relates to a rubber coating for a radiofrequency identification device for a tyre characterized in that it comprises:
(a) 100 phr of at least one diene-based elastomer
(b) at least one chemical according to formula 1 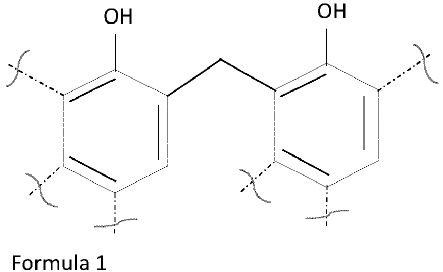
wherein the chemical comprises in its structure at least the structure of the 2,2'-methylenediphenol, and wherein the 2,2' - methylenediphenol may be substituted in ortho, para, meta position or any combination thereof with an aliphatic, linear or branched, hydrocarbon chain comprising from 1 to 10 C atoms, or may be polymerized in ortho, para, meta position or any combination thereof with one or more additional alkylphenol units.

In a second aspect the present invention relates to a radiofrequency identification module for a tyre. The radiofrequency identification module comprises at least a radiofrequency identification device, comprising at least an antenna, wherein the antenna has an outer surface and wherein at least the antenna's outer surface is surrounded by a rubber coating, the rubber coating being characterized in that it comprises:
(a) 100 phr of at least one diene-based elastomer
(b) at least one chemical according to formula 1 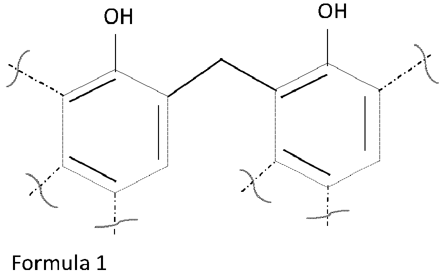
wherein the chemical comprises in its structure at least the structure of the 2,2'-methylenediphenol, and wherein the 2,2' - methylenediphenol may be substituted in ortho, para, meta position or any combination thereof with an aliphatic, linear or branched, hydrocarbon chain comprising from 1 to 10 C atoms, or may be polymerized in ortho, para, meta position or any combination thereof with one or more additional alkylphenol units.

In a third aspect the present invention relates to a tyre or a tyre retread comprising the radiofrequency identification module according to the second aspect of the invention.

In a fourth aspect the present invention relates to the use of a rubber coating according to the first aspect of the invention for surrounding a radiofrequency identification device for a tyre, the radiofrequency identification device comprising at least an antenna, wherein the antenna has an outer surface and wherein at least the antenna's outer surface is surrounded by the rubber coating, the rubber coating being characterized in that it comprises:
(a)100 phr of at least one diene-based elastomer,
(b) at least one chemical according to formula 1 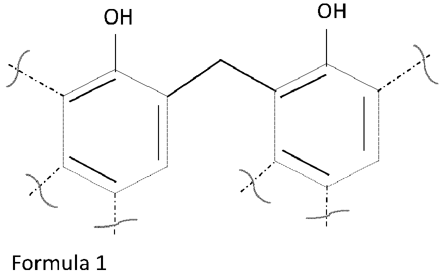
wherein the chemical comprises in its structure at least the structure of the 2,2'-methylenediphenol, and wherein the 2,2' - methylenediphenol may be substituted in ortho, para, meta position or any combination thereof with an aliphatic, linear or branched, hydrocarbon chain comprising from 1 to 10 C atoms, or may be polymerized in ortho, para, meta position or any combination thereof with one or more additional alkylphenol units.

Preferred features of the invention are the object of the dependent claims.

### BRIEF DESCRIPTION OF THE DRAWINGS

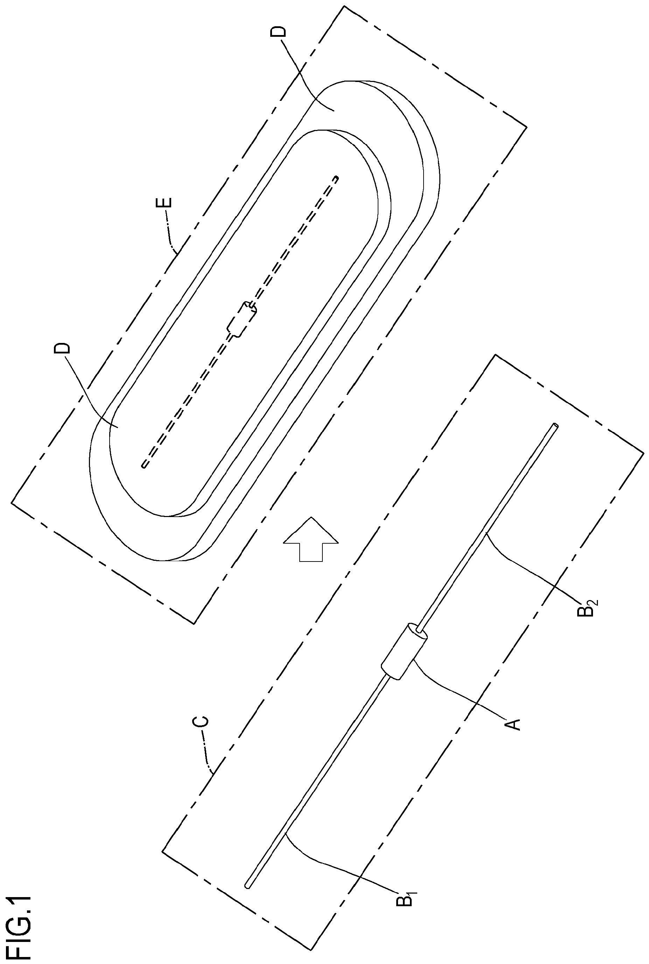

FIG. 1 is a schematization of an RFID module (E), the RFID module comprising an RFID device (C) which comprises an RFID chip (A), and one antenna electrically coupled thereto; the antenna consisting of two antenna branches (B1 and B2), and it's surrounded by two layers of coating compound (D).

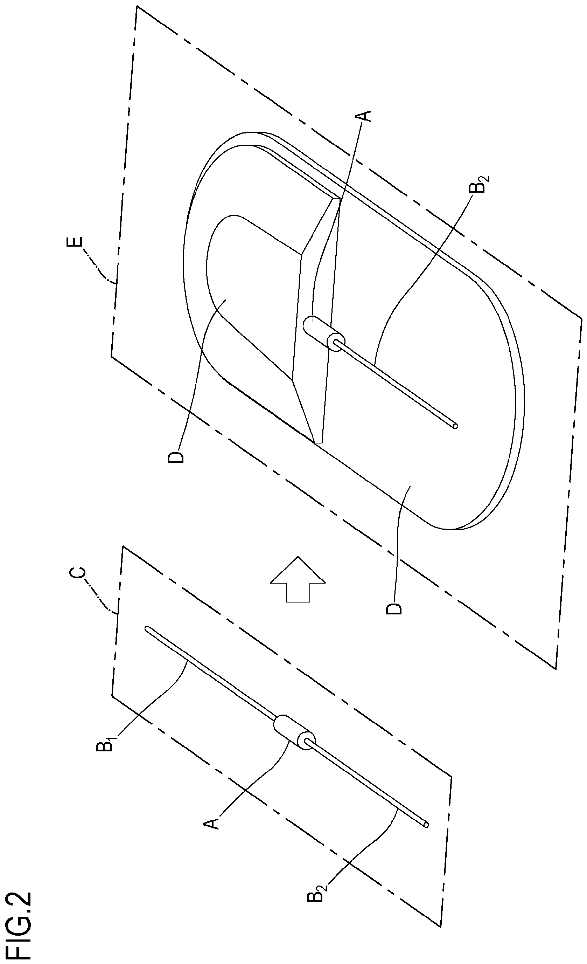

FIG. 2 is a second schematic view of and RFID module (E), the RFID module comprising an RFID device (C) which comprises an RFID chip (A), and one antenna electrically coupled thereto; the antenna consisting of two antenna branches (B1 and B2), and it's surrounded by two layers of coating compound (D).

### RUBBER COATING

According to a first aspect, the invention is directed to a rubber coating for a radiofrequency identification device for a tyre.

The rubber coating disclosed herein comprises: (a) 100 phr of at least one diene-based elastomer; (b) at least one chemical according to formula 1: 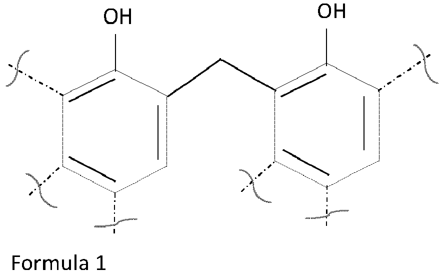 wherein the chemical comprises in its structure at least the structure of the 2,2'-methylenediphenol, and wherein the 2,2' - methylenediphenol may be substituted in ortho, para, meta position or any combination thereof with an aliphatic, linear or branched, hydrocarbon chain comprising from 1 to 10 C atoms, or may be polymerized in ortho, para, meta position or any combination thereof with one or more additional alkylphenol units.

In a preferred embodiment a rubber coating applied to a radiofrequency identification device is disclosed. The rubber coating comprises:
(a) 100 phr of at least one diene-based elastomer;
(b) at least one chemical according to formula 1 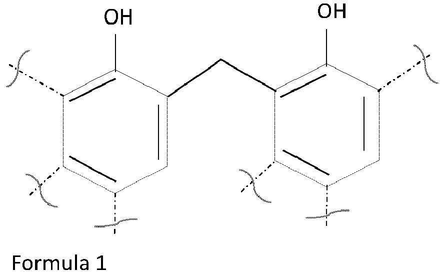
wherein the chemical comprises in its structure at least the structure of the 2,2'-methylenediphenol, and wherein the 2,2' - methylenediphenol may be substituted in ortho, para, meta position or any combination thereof with an aliphatic, linear or branched, hydrocarbon chain comprising from 1 to 10 C atoms, or may be polymerized in ortho, para, meta position or any combination thereof with one or more additional alkylphenol units.

Herein and after the term "applied to" when used in connection to the rubber coating and the radiofrequency identification device has the meaning that the rubber coating is effectively surrounding the radiofrequency identification device, that is being disposed all around the whole or at least a portion of the radiofrequency identification device, preferably in direct contact with it.

As used herein and after, the term "surrounding" or "surrounded by" when used in connection to the rubber coating and other elements like the antenna or the radiofrequency identification device has the meaning that the rubber coating is disposed all around the whole or at least a portion of that element (e.g. the antenna or the radiofrequency identification device), preferably in direct contact with said element, independently from the method used for assembling the radiofrequency identification module.

All discussion of the rubber coating and its component ingredients provided herein should be interpreted as to apply equally to each of the embodiments of the invention unless indicated to the contrary.

The diene-based elastomer and the chemical according to the above structure are discussed in more detail below.

As used herein and after, the term "diene-based elastomer" refers to a diene-monomer containing polymer, copolymer, or combination thereof. Non-limiting examples of suitable diene-based elastomers for use in the rubber coatings include, but are not limited to, at least one of styrene-butadiene rubber (also referred to as SBR or styrene-butadiene copolymer), polybutadiene (also referred as BR), natural rubber (also referred as NR), ethylene propylene diene monomer rubber (also referred as EPDM rubber), butyl rubber (also referred as IIR), polyisobutylene rubber, epoxidized natural rubber (also referred as ENR), neoprene, synthetic polyisoprene (also referred as IR), polyurethane (also referred as PU).

The diene-based elastomer of the rubber coating, may comprise a functionalized diene-based elastomer.

The term "functionalized diene-based elastomer" should be interpreted to include elastomers with a functional group at one or both ends of the chain or in the main chain of the elastomer, and any combinations thereof. For example, a silica-reactive functionalized elastomer may have the functional group at one or both ends of the chain, or in the main chain thereof, or both.

Non-limiting examples of silica-reactive functional groups that are known to be utilized in functionalizing diene-based elastomers and that are suitable for use in the rubber coatings include nitrogen-containing functional groups, silicon-containing functional groups, oxygen- or sulfur-containing functional groups, and metal-containing functional groups.

Preferably the diene-based elastomer is selected from natural rubber, polyisoprene, or a mixture of the two.

The term "natural rubber" refers to naturally occurring 1,4 cis polyisoprene polymer such as that can be harvested from sources such as Hevea rubber trees and non-Hevea sources (e.g., guayule shrubs and dandelions such as TKS).

The term "natural rubber" should be interpreted so as to exclude synthetic polyisoprene. Polyisoprene can be interpreted as to mean a homopolymer of isoprene monomers, and should not be construed as including naturally occurring rubber. However, the term polyisoprene should be interpreted as including polyisoprenes manufactured from natural sources of isoprene monomer.

The rubber coating according to the first-fourth embodiments further comprises a chemical comprising in its structure at least the structure of the 2,2'-Methylenediphenol, according to formula 1 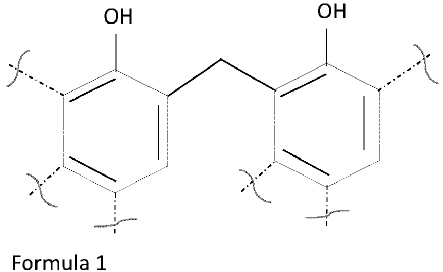 wherein the 2,2'- methylenediphenol may be substituted in ortho, para, meta position or any combination thereof with an aliphatic, linear or branched, hydrocarbon chain comprising from 1 to 10 C atoms or may be polymerized in ortho, para, meta position or any combination thereof with one or more additional alkylphenol units.

It is understood that ortho, para or meta position refers to the position of the substituents on the C atoms of the benzene ring with respect to the -OH group that is assumed to occupy position 1. The positions are numbered in a clockwise direction. Accordingly, the substituents may occupy the positions adjacent to the -OH (position 2 or 6) and being referred as ortho-substituents; the substituents may occupy the positions 3 or 5 with respect to the -OH, and being referred as meta-substituents; the substituents may occupy the position opposite to the -OH (position 4) and being referred as para-substituents.

According to a preferred embodiment, the chemical is derived from polymerizing the 2,2'- methylenediphenol in ortho, para, meta position or any combination thereof with one or more additional alkylphenol units.

As used herein the term "polymerizing" refers to the action of performing the chemical process of polymerization, which is intended as any process in which relatively small molecules, called monomers, are reacted together in certain conditions to produce a very large chainlike or network molecule, called a polymer.

According to a preferred embodiment, the chemical is an alkyl phenol formaldehyde (APF) resin.

The term phenol formaldehyde resin or alkyl phenol formaldehyde resin refers to synthetic polymeric structures obtained by the reaction of phenol or substituted phenol (alkyl phenol) with formaldehyde.

In general phenol-formaldehyde resins or alkyl phenol formaldehyde resins, may be formed by a step-growth polymerization reaction that can be either acid- or base-catalyzed in which phenol or alkyl phenol reacts with formaldehyde at the ortho and/or para sites allowing the creation of a methylene bridge at either the ortho position or the para position of the phenolic rings generating the methylene diphenol dimer, which is involved in further reaction as the polymerization proceeds. As an expert of the fields knows the para position is approximately twice as reactive as the ortho position, but there are twice as many ortho sites (two per phenol molecule) so the fractions of ortho-ortho, para-para and ortho-para bridges in the structure are approximately equal, causing, as the reaction continues, the random orientations and branching of the structure, thus generating an extremely complex mixture of polymers of different sizes and structure.

According to a further preferred embodiment the alkyl phenol formaldehyde resin is a novolak resin.

Novolak resins are alkyl phenol-formaldehyde resins with a formaldehyde to phenol molar ratio of less than one. They are often produced by the polymerization of cresols (methylphenols) monomers.

According to a further preferred embodiment the chemical is 2,2'-Methylenebis(4-methyl-6-tert-butylphenol)

The methylene diphenol dimer is substituted in para position by a methyl group and in ortho position by a t-butyl group, as described in formula 2.

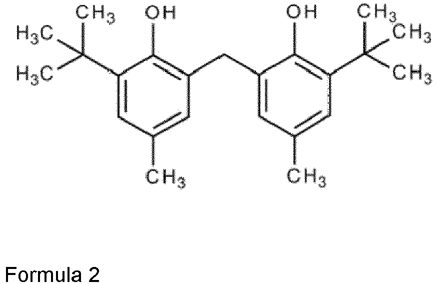

According to a further preferred embodiment the chemical may be a mixture of APF resin, preferably novolak resin, and 2,2'-Methylenebis(4-methyl-6-tertbutylphenol).

According to a preferred embodiment the chemical may be introduced in the rubber coating in a quantity ranging from 0,1 to 10 phr, preferably 0,1 to 7 phr. In a particularly preferred embodiment, 2,2'-Methylenebis(4-methyl-6-tertbutylphenol) may be added in a quantity ranging from 0,1 to 3 phr. In a further preferred embodiment APF resin may be introduced in a quantity ranging from 0,1 to 7 phr.

The rubber coating may further comprise at least one filler. The at least one filler may be selected from the following: carbon black, silica, graphite, graphene, carbon nanotubes, recycled carbon black, clay, titanium dioxide, magnesium dioxide, aluminum oxide, starch, boron nitride, silicon nitride, aluminum nitride, calcium silicate, or silicon carbide or a mixture of those. In certain embodiments, the rubber coating comprises from 1 to 120 phr of filler, preferably from 10 to 110, more preferably from 20 to 100, more preferably from 30 to 90, more preferably from 40 to 80 phr of filler. In certain embodiments the rubber coating may be free of (i.e., comprises 0 phr) any filler. In a preferred embodiment the filler comprised is silica. In a further preferred embodiment silica is the only filler included in the composition.

When silica is used in the rubber compositions disclosed herein, in certain embodiments at least one silane coupling agent may be used. In accordance with certain embodiments, the silane coupling agent is present in an amount from 0,01% to 40% by weight of the silica, preferably from 0,01% to 30%, preferably from 0,01% to 25% by weight of the silica. Generally speaking, any conventional type of silane coupling agent, can be used, such as those having a silicon group and a moiety that can react with a rubber, particularly a vulcanizable rubber. The silane coupling agent acts as a connecting bridge between silica and the rubber. Suitable silane coupling agents include those containing groups such as mercapto, blocked mercapto, polysulfide, amino, vinyl, epoxy, and combinations thereof. Preferably, the silane used in subject invention is bis-(3-triethoxy-silylpropyl) disulfide (Si75).

According to certain embodiments the rubber coating may further comprise one or more additional ingredients. Non-limiting examples of those additional ingredients are discussed below.

The rubber coating may further comprises one or more process oils which may be useful in improving processability by reducing the Mooney viscosity of the rubber coating before curing. In such embodiments, the one or more process oils may be added as a free oil to the rubber coating, as part of the at least one diene-based elastomer (i.e., as an extender oil), or as a combination of both. Non-limiting examples of oils useful in the rubber coatings include paraffinic, naphthenic, aromatic process, and the like. Preferably the oil used in the subject invention is RAE oil. The rubber coating may comprises 0 (optional) to 40 phr of one or more oils (process, extender, or both), preferably 1 to 35 phr, preferably 5 to 25 phr, more preferably 5 to 20 phr of one or more oils such as those disclosed above.

The rubber coating may further include other conventional rubber additives. These include, for example, anti-degradants such as antioxidants and anti-ozonants.

Anti-degradants are ingredients added to protect the rubber from oxidative attack. Examples of anti-degradants includes phenylenediamines, for example N-(1,3-dimethylbutyl)-N'-phenyl-1,4-benzenediamine (6PPD), trimethyl-dihydroquinolines, for example 2,2,4-Trimethy1-1,2-Dihydroquinoline content (TMQ), phenolics, alkylated diphenylamines (DPAs), paraffinic waxes or microcrystalline waxes or their blends, aromatic phosphites, and diphenylamine-ketone condensates. Suitable amounts of such components can be determined by one skilled in the art.

The rubber coating may further include a curing package. Generally, the curing package includes at least one of: a vulcanizing agent, a vulcanizing accelerator, a vulcanizing activator (for example zinc oxide, stearic acid, and the like), a vulcanizing inhibitor, and an anti-scorching agent. The curing package that may be used in the present invention includes at least one vulcanizing agent, at least one vulcanizing accelerator, at least one vulcanizing activator and optionally a vulcanizing inhibitor and/or an anti-scorching agent. Vulcanizing accelerators and vulcanizing activators act as catalysts for the vulcanization agent. Vulcanizing inhibitors and anti-scorching agents are known in the art and can be selected by one skilled in the art based on the vulcanizate properties desired.

Examples of suitable types of vulcanizing agents for use in the rubber coatings, include but are not limited to sulfur or peroxide-based curing components. Examples of specific suitable sulfur vulcanizing agents include soluble sulfur; sulfur donating curing agents, such as an amine disulfide, polymeric polysulfide or sulfur olefin adducts; and insoluble polymeric sulfur. Preferably, the sulfur vulcanizing agent is insoluble sulfur or a mixture of soluble and insoluble polymeric sulfur. Vulcanizing agents can be used alone or in combination.

Generally, the vulcanizing agents are used in an amount ranging from 0,1 to 10 phr, preferably from 1 to 8 phr.

Vulcanizing accelerators are used to control the time and/or temperature required for vulcanization and to improve properties of the vulcanizate. Examples of suitable vulcanizing accelerators for use in the rubber coatings according to the invention include, but are not limited to, thiazole vulcanization accelerators, such as 2-mercaptobenzothiazole, 2,2'-dithiobis(benzothiazole) (MBTS) and the like; sulfonamide vulcanization accelerator, such as N-cyclohexyl-2-benzothiazolesulfenamide (CBS), N-tert-butyl-2-benzothiazole-sulfenamide (TBBS), N,N-Dicyclohexyl -2- benzothiazolesulfenamide (DCBS) and the like; guanidine vulcanization accelerators, such as diphenyl guanidine (DPG) and the like; thiuram vulcanizing accelerators, such as tetrabenzylthiuram disulphide (TBzTD) and the like; carbamate vulcanizing accelerators; Hexamethylene-1,6-bis-Thiosulfate (HTS); and the like. Preferably, the vulcanization accelerators used in this invention are CBS or DPG or a mixture of the two. Generally, the amount of the vulcanization accelerators used ranges from 0,1 to 10 phr, preferably 0,5 to 5 phr.

Vulcanizing activators are additives used to support vulcanization. Generally vulcanizing activators include both an inorganic and organic component. Zinc oxide is the most widely used inorganic vulcanization activator. Various organic vulcanization activators are commonly used including stearic acid, palmitic acid, lauric acid, and zinc salts of each of the foregoing. Generally, the amount of vulcanization activator used ranges from 0,1 to 8 phr, more preferably from 0,5 to 6 phr.

Vulcanization inhibitors are used to control the vulcanization process and generally retard or inhibit vulcanization until the desired time and/or temperature is reached. Common vulcanization inhibitors include, but are not limited to, PVI (cyclohexylthiophthalmide).Generally, the amount of vulcanization inhibitor is 0,1 to 3 phr, preferably 0,5 to 2 phr.

In certain embodiments the rubber coating may further comprise organic salts or complexes of cobalt as additives for adhesion promoters. As an expert of the field knows the adhesive interphase between the coating rubber and the metal surface of the antenna plays a major role in the durability of the RFID module .To improve the adhesion, organic salts or complexes of cobalt as additives may be included in the composition. Examples of suitable cobalt salts for use in the rubber coatings according to the invention include, but are not limited to cobalt boron neodecaoate or cobalt naphthenate. Generally, the amount of cobalt salts used ranges from 0,1 to 5 phr, more preferably from 0,5 to 3 phr.

### RADIOFREQUENCY IDENTIFICATION DEVICE

In a second aspect, a radiofrequency identification module for a tyre is disclosed. The radiofrequency identification module comprises a radiofrequency identification device which comprises at least an antenna, the antenna preferably having a core which is covered by a brass layer, wherein the antenna has an outer surface and wherein at least the antenna's outer surface is surrounded by a rubber coating, the rubber coating comprising:
(a) 100 phr of at least one diene-based elastomer;
(b) at least one chemical according to formula 1 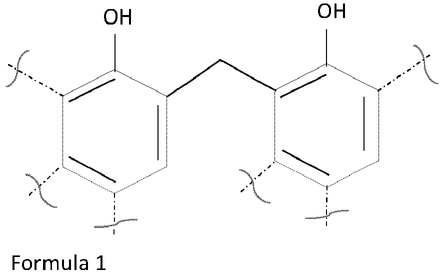
wherein the chemical comprises in its structure at least the structure of the 2,2'-methylenediphenol, and wherein the 2,2' - methylenediphenol may be substituted in ortho, para, meta position or any combination thereof with an aliphatic, linear or branched, hydrocarbon chain comprising from 1 to 10 C atoms, or may be polymerized in ortho, para, meta position or any combination thereof with one or more additional alkylphenol units.

The radiofrequency identification device comprises at least an antenna electrically connected to a chip, the antenna having an outer surface, wherein at least the antenna's outer surface is surrounded by the rubber coating. In certain embodiments, the majority of the outer surface of the at least one antenna is surrounded by the rubber coating. The phrase "a majority" as used herein refers to greater than 50% and up to 100%. In a preferred embodiment the antenna is a dipole antenna and comprises two antenna branches extending on two opposed and different sides of the chip of the radiofrequency identification device. In certain embodiments, the majority of the outer surface of both antenna branches is surrounded by the rubber coating. In a further embodiment the radiofrequency identification device comprises two antennas electromagnetically coupled within each other wherein one of the two antennas is electrically connected to the chip. In certain embodiments, the majority of the outer surface of the two antennas is surrounded by the rubber coating. In yet other embodiments the entirety of the outer surface of the radiofrequency identification device is surrounded by the rubber coating.

The rubber coating may be placed upon the radiofrequency identification device using various methods. In certain embodiments, the rubber coating is placed upon the radiofrequency identification device as rubber sheets or layers. More specifically, in such embodiments, the rubber coating is calendered or otherwise formed into an uncured sheet of rubber having a uniform thickness (such as from 0,2 mm to about 1,2 mm). The radiofrequency identification device is placed onto the upper surface of the rubber sheet with a portion of the lower surface of the radiofrequency identification device contacting the rubber sheet. A second rubber sheet (generally having the same thickness as the first sheet) is placed over the upper surface of the radiofrequency identification device so that the outer surface of the radiofrequency identification device is covered by the two rubber layers. The two rubber layers are then pressed together to promote adhesion of first rubber layer to the second rubber layer with the radiofrequency identification device substantially captured in between. Adhesion of the two rubber layers may be assisted by various means such as by using a dual roller assembly to press the components together and expel any trapped air, by stitching the layers together (such as by using a stitching roller), by manual finger pressure, by use of an inflatable bladder, by use of a compression molding fixture, or by any other means suitable for assisting in the adhesion of the two rubber layers. Preferably, the radiofrequency identification module, comprising the RFID device and the rubber coating has a total thickness of 6 mm.

According to the present invention embodiments, the radiofrequency identification device comprises an RFID chip, and at least one antenna connected to the chip.

Usually RFID antennas are made by a layered structure comprising a core and a covering layer. Several materials are known in the art for the manufacturing of RFID antennas. In particular the core is generally a metal core such as for example an iron or steel core, The covering layer can be for example made by brass or by copper or by copper alloys, for example Copper-Nickel (Cu-Ni) alloy.

According to a preferred embodiment of the invention the antenna connected to the RFID chip is composed of a multilayered structure comprising a core of steel covered with a layer made of brass.

### TYRE

According to a third aspect of the invention, the radiofrequency identification module herein described is incorporated in a tyre or a tyre retread. In other words, the third embodiment is directed to a tyre or a tyre retread having incorporated therein a radiofrequency identification module comprising a radiofrequency identification device comprising at least an antenna, the antenna preferably having a core which is covered by a brass layer, the antenna having an outer surface wherein at least the antenna's outer surface is surrounded by a rubber coating comprising
(a) 100 phr of at least one diene-based elastomer;
(b) at least one chemical according to formula 1 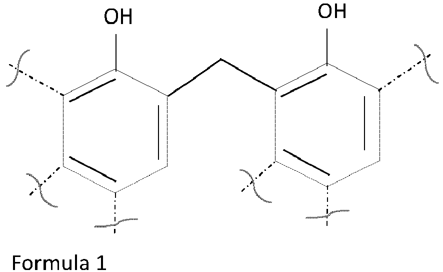
wherein the chemical comprises in its structure at least the structure of the 2,2'-methylenediphenol, and wherein the 2,2' - methylenediphenol may be substituted in ortho, para, meta position or any combination thereof with an aliphatic, linear or branched, hydrocarbon chain comprising from 1 to 10 C atoms, or may be polymerized in ortho, para, meta position or any combination thereof with one or more additional alkylphenol units.

In accordance with further embodiments, the radiofrequency identification module may be incorporated in various components of a tyre, e.g., tread, sidewall, belt skim, or carcass.

As used herein and after, the term tyre is meant to include also a used or worn tyre which has been provided with a new tread strip applied to the outer surface of the tyre casing during the a process called re-treading. The tyre undergoing such process is commonly defined as retreaded tyre.

As used herein and after, the term "tyre retread" is meant to include previously prepared tread strips to be applied to tyre casing during the process of re-treading the tyre.

As used herein and after, the term "incorporated" or "incorporated into" is meant to include not only embedding or inserting into the interior portion of the tyre or the tyre retread, but also associating with the tyre or the tyre retread in other ways such as by the use of a patch onto an outer surface of the tyre like e.g. the innerliner or the sidewall.

According to a further embodiment the patch that is used to associate the radiofrequency identification module with the tyre or the tyre retread may have the composition of the rubber coating disclosed herein according to the first embodiment of the invention.

In accordance with further embodiments, the rubber coating surrounding at least the outer surface of the at least one antenna of the radiofrequency identification device is cured (vulcanized) prior to incorporation of the radiofrequency identification module into the tyre or tyre component.

According to such embodiments, when the rubber coating surrounding at least the outer surface of the at least one antenna of the radiofrequency identification device in the radiofrequency identification module is cured prior to its incorporation into the tyre or tyre component, the radiofrequency identification module may be adhered to the cured rubber coating of the tyre or tyre component using a patch, a suitable adhesive, or a cement capable of withstanding the operating conditions of a tyre. In certain embodiments, the patch may comprise the rubber coating that surrounds at least the outer surface of the at least one antenna of the radiofrequency identification device.

Furthermore, the rubber coating surrounding at least the outer surface of the at least one antenna of the radiofrequency identification device in the radiofrequency identification module may be incorporated into the tyre or the tyre retread prior to curing the rubber coating of the radiofrequency identification module. In such embodiments, the radiofrequency identification module comprising the uncured rubber coating is incorporated into the desired location of a tyre or a tyre retread. The uncured rubber coating of the radiofrequency identification module is then cured simultaneously along with the tyre or tyre retread.

Generally, when the rubber coatings disclosed herein are utilized in tyres or tyre retreads, these compositions are incorporated into a tyre or a tyre retread according to ordinary tyre manufacturing techniques including standard rubber shaping, molding, and curing techniques.

According to a fourth aspect, the present invention is directed to the use of the rubber coating comprising:
(a) 100 phr of at least one diene-based elastomer;
(b) at least one chemical according to formula 1 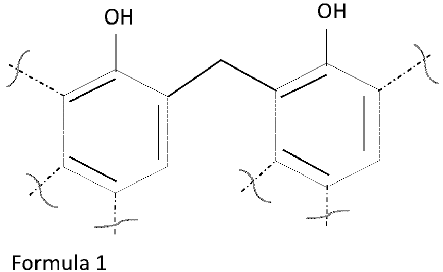
wherein the chemical comprises in its structure at least the structure of the 2,2'-methylenediphenol, and wherein the 2,2' - methylenediphenol may or may not be substituted in ortho, para, meta position or any combination thereof with an aliphatic, linear or branched, hydrocarbon chain comprising from 1 to 10 C atoms, or may be polymerized in ortho, para, meta position or any combination thereof with one or more additional alkylphenol units, for surrounding a radiofrequency identification device, which can be further incorporated into a tyre or a tyre retread according to the third embodiment.

### EXAMPLES

The following examples illustrate specific and exemplary embodiments and/or features of the embodiments of the present disclosure. The examples are provided solely for the purposes of illustration and should not be construed as limitations of the present disclosure. Numerous variations over these specific examples are possible without departing from the scope of the present invention.

More specifically, the diene-based elastomers, the filler, and other ingredients (e.g., curative package ingredients, anti-degradants or process oil etc.) utilized in the following examples should not be interpreted as limiting since other or additional ingredients consistent with the disclosure in the detailed description can be utilized in substitution.

A control composition (Example C) and two different sets of examples according to the invention were prepared: Example A(1-3) and Example B(1-3). Examples A(1-3) differs from the control composition of Example C for containing different amount of one chemical according to the invention, namely alkyl phenol formaldehyde resin (APF resin). Examples B(1-3) differs from the control composition of Example C for containing different amount of one chemical according to the invention, namely 2,2'-Methylenebis(4-methyl-6-tertbutylphenol) (NS6). The rubber compositions of all the examples (control example and invention examples) were prepared according to the formulations shown in Table 1, with all ingredients in Table 1 are listed in phr.

**Table 1**

| Example # | C | A-1 | A-2 | A-3 | B-1 | B-2 | B-3 |
|---|---|---|---|---|---|---|---|
| Natural Rubber | 100 | 100 | 100 | 100 | 100 | 100 | 100 |
| Silica | 60 | 60 | 60 | 60 | 60 | 60 | 60 |
| Silane | 6 | 6 | 6 | 6 | 6 | 6 | 6 |
| Sulfur | 6.8 | 6.8 | 6.8 | 6.8 | 6.8 | 6.8 | 6.8 |
| Zinc Oxide | 4 | 4 | 4 | 4 | 4 | 4 | 4 |
| Stearic Acid | 2 | 2 | 2 | 2 | 2 | 2 | 2 |
| Accelerator | 1.3 | 1.3 | 1.3 | 1.3 | 1.3 | 1.3 | 1.3 |
| 6PPD | 0.5 | 0.5 | 0.5 | 0.5 | 0.5 | 0.5 | 0.5 |
| TMQ | 0.5 | 0.5 | 0.5 | 0.5 | 0.5 | 0.5 | 0.5 |
| RAE oil | 12.6 | 12.6 | 12.6 | 12.6 | 12.6 | 12.6 | 12.6 |
| Cobalt salt | 1.2 | 1.2 | 1.2 | 1.2 | 1.2 | 1.2 | 1.2 |
| APF resin | - | 2 | 3 | 5 | - | - | - |
| NS6 | - | - | - | - | 0,5 | 1 | 2 |

The silane coupling agent used is a bis-(3-triethoxy-silylpropyl) disulfide silane (Si75)

The accelerators used is N-Cyclohexyl-2-benzothiazolesulfenamide (CBS).

The oil used is Residual Aromatic Extract (RAE).

The cobalt used is a Neodecanoic acid salt.

The rubber compositions of all the examples of table 1 were mixed according to the following mixing procedure:
The cross-linkable polymer base and the carbon black were loaded into a mixer with tangential rotors and with an inner volume ranging from 230 to 270 liters before the beginning of the mixing, thus reaching a filling factor ranging from 66 to 72%.

### (first mixing step)

The mixer was operated at a speed ranging from 40 to 60 revolutions/minute and the mixture resulting therefrom was removed after having reached a temperature ranging from 140 to 160°C.

### (second mixing step)

The mixture obtained from the preceding step was newly processed in a mixer operated at a speed ranging from 40 to 60 revolutions/minute and, subsequently, was removed after having reached a temperature ranging from 130 to 15°C.

### (final mixing step)

The vulcanization system (sulphur, accelerators, anti-reversion agents, antioxidants/antiozonants, zinc oxide) was added to the mixture obtained from the preceding step, thus reaching a filling factor ranging from 63 to 67%.

The mixing was operated at a speed ranging from 20 to 40 revolutions/minute and the mixture resulting therefrom was removed after having reached a temperature ranging from 100 to 110°C

Each of the rubber composition of table 1 was used for preparing an RFID module comprising an RFID device surrounded by a rubber coating according to each of the example of table 1. Such RFID modules were prepared by the following method:
The rubber coating according to the examples, calendered in the form of sheets or layers having an average thickness of 0,6 mm, was placed upon the radiofrequency identification device. The radiofrequency identification device was placed onto the upper surface of one rubber sheet with a portion of the lower surface of the radiofrequency identification device contacting the rubber sheet. A second rubber sheet (having the same thickness as the first sheet) was placed over the upper surface of the radiofrequency identification device so that the outer surface of the radiofrequency identification device was covered by the two rubber layers. The two rubber layers were then pressed together to promote adhesion of the first rubber layer to the second rubber layer with the radiofrequency identification device captured between. The adhesion of the two rubber layers was assisted by using a dual roller assembly to press the components together and expel any trapped air.

At the end of this process the radiofrequency identification module, comprising the RFID device and the surrounding rubber coating has a total thickness of 6 mm.

The RFID modules described above were tested to determine adhesion of the rubber coating to the RFID device according to the following test methods: CRA force rating, and CRA coverage.

### CRA force rating

With this test method it is possible to determine the force required to pull the RFID device from a rubber pad. The test was performed according to following procedure: the samples of RFID device under evaluation were coated by the coating rubber according to the invention. The test was performed by pulling the RFID device from the coating rubber at the 180 degree peel angle using a constant rate of extension (CRE) test machine, which measures the maximum force applied to pull out the device from the rubber pad. The test procedure consists in placing about 2 mm of the exposed ends of the RFID antennas in the center of the upper clamp of the testing machine and about 2 mm of the end of the pad, from which the RFID has to be peeled, in the lower clamp. The pad axis has to be parallel to the vertical axis of the test machine. The RFID device is pulled from the pad, and it is recorded, , the maximum pull-out force (in Newton) required to extract the device. The test is performed at room temperature.

The values of the peeling force were indexed versus a control RFID device coated by a conventional coating compound (C). The peeling force for peeling out the RFID device from the coating compound in the control C was conventionally rated as 100.

Higher values of the examples of the invention with respect to the control represent an higher adhesion of the RFID to the coating compound because they correspond to an higher force to be applied to extract the RFID from the rubber pad.

### CRA coverage

With this test method it is possible to rank the quantity of rubber which remains covering the RFID device after the device is pulled from a rubber pad, with the purpose of evaluating the adhesion characteristics. It is based on visual judgment.

The samples of RFID device under evaluation were coated by the coating rubber according to the invention. The test was performed by pulling the RFID device from the coating rubber at the 180 degree peel angle using a constant rate of extension (CRE) test machine. The test procedure consists in placing about 2 mm of the exposed ends of the RFID antennas in the center of the upper clamp of the testing machine and about 2 mm of the end of the pad, from which the RFID has to be peeled, in the lower clamp. The pad axis has to be parallel to the vertical axis of the test machine. The RFID device is pulled from the pad, and the test is stopped when the RFID pull out reaches approximately the 30 mm line. The test is performed at room temperature.

Before releasing the pad from the clamps the rubber coverage on the RFID device is visually judged and recorded. The ranking is expressed in percent of rubber still covering the RFID antenna surface.

The ranking of the rubber coverage was reported versus a control RFID device coated by a conventional coating compound (C). The ranking of the control C was conventionally rated as 10%.

Higher values of the examples of the invention with respect to the control represent an higher adhesion because they correspond to lower exposure of the RFID antenna surface.

In table 2 are shown the test results for each RFID device covered by the rubber coating of the examples. The results are indexed to those of control Compound C representing, as stated, a commonly used rubber coating for RFID devices.

**Table 2**

| Example # | C | A-1 | A-2 | A-3 | B-1 | B-2 | B-3 |
|---|---|---|---|---|---|---|---|
| CRA force rating (N) | 100 | 159 | 232 | 257 | 118 | 153 | 203 |
| CRA coverage (%) | 10 | 20 | 20 | 20 | 12 | 15 | 15 |

As shown by the above table of results, the values obtained by the CRA force rating test show that each of the rubber coating according to the present invention, after ageing by water or oxygen, is able to increase the level of adhesion with respect to the control compound. Consistently, CRA coverage judgement showed higher adhesion performance of the rubber coating according to the preset inventions with respect to the control compound. This increase in adhesion of the rubber coating to the RFID device was achieved without having to treat the antennas by adhesion enhancing agents. As discussed, the present invention is therefore able to fulfilling the need of ensuring the structural stability and durability of the radio-frequency identification module to be inserted in a tyre and at the same time keeping the readability performance of the antenna, without jeopardizing the productivity of the RFID production process and ensuring the safety of the operators.

## Claims

1. A rubber coating for a radiofrequency identification device for a tyre **characterized in that** it comprises:
(a) 100 phr of at least one diene-based elastomer,
(b) at least one chemical according to formula 1 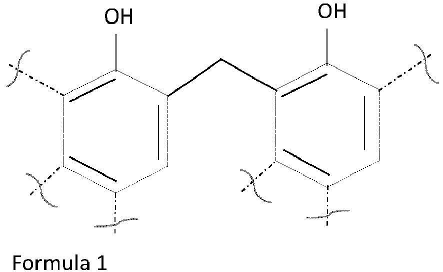
wherein the chemical comprises in its structure at least the structure of the 2,2'-methylenediphenol, and wherein the 2,2' - methylenediphenol may be substituted in ortho, para, meta position or any combination thereof with an aliphatic, linear or branched, hydrocarbon chain comprising from 1 to 10 C atoms, or may be polymerized in ortho, para, meta position or any combination thereof with one or more additional alkylphenol units.

2. The rubber coating according to claim 1, **characterized in that** the chemical is selected from an alkyl phenol formaldehyde resin, preferably a novolak resin, or 2,2'-Methylenebis(4-methyl-6-tert-butylphenol) or a combination of the two.

3. The rubber coating according to claim 1 or 2, **characterized in that** it comprises between 0,1 and 10 phr of the chemical, preferably between 0,1 and 7 phr.

4. The rubber coating according to any preceding claims, **characterized in that** it further comprises at least one filler.

5. The rubber coating according to claim 4 , **characterized in that** the filler is silica.

6. The rubber coating according to any preceding claims, **characterized in that** the diene-based elastomer is natural rubber or polyisoprene or a mixture of the two.

7. A radiofrequency identification module for a tyre, comprising a radiofrequency identification device, comprising at least an antenna, wherein the antenna has an outer surface and wherein at least a portion of the antenna's outer surface is surrounded by a rubber coating according to any of claims 1 to 6.

8. The radiofrequency identification module of claim 7 **characterized in that** the antenna comprises a core which is at least partially covered with a brass layer.

9. The radiofrequency identification module of any of claims 7 to 9, **characterized in that** the majority of the radiofrequency identification device is surrounded by the rubber coating, preferably the entirety of the radiofrequency identification device is surrounded by the rubber coating .

10. A tyre or a tyre retread **characterized in that** it comprises the radiofrequency identification module according to any of claims 7 to 9.

11. A use of a rubber coating according to any of claims 1 to 6 for surrounding a radiofrequency identification device for a tyre, the radiofrequency identification device comprising at least an antenna, wherein the antenna has an outer surface and wherein at least the antenna's outer surface is surrounded by the rubber coating.

12. The use of a rubber coating according to claim 12 **characterized in that** the antenna comprises a core which is at least partially covered with a brass layer.
